# EUROPEAN PATENT SPECIFICATION

(11) **EP 3 227 756 B1**
(45) Date of publication and mention of the grant of the patent: **19.06.2019**
(21) Application number: 15798616.7
(22) Date of filing: 10.11.2015
(51) Int. Cl.: G05D 7/06, F15D 1/10, G01F 1/40, G01F 1/30, G01F 1/68, G01F 15/00, G01F 1/88, G01F 1/48, G01F 1/684, G01F 5/00

(54) **WIRELESS FLOW RESTRICTOR OF A FLOWMETER**
DRAHTLOSER DURCHFLUSSBEGRENZER EINES DURCHFLUSSMESSERS
RESTRICTEUR DE FLUX SANS FIL D'UN DÉBITMÈTRE

(30) Priority: 04.12.2014 US 201462087490 P
(43) Date of publication of application: 11.10.2017
(73) Proprietor: Illinois Tool Works Inc., Glenview, IL 60025 (US)
(72) Inventor: ALTONJI, Robert W., Glenview, IL 60025 (US)
(74) Representative: Trinks, Ole
(86) International application number: PCT/US2015/059846
(87) International publication number: WO 2016/089552

(56) References cited:
- WO-A1-98/02686
- WO-A1-2013/134150
- GB-A- 2 146 139
- US-A- 4 800 754
- US-A- 4 886 086
- US-A- 5 099 881
- US-A- 5 861 546

## Description

### BACKGROUND

Mass flow meters, thermal or pressure based, typically use a restriction (sometimes referred to as a 'bypass') in the flow path to provide a pressure differential to either divert flow to a secondary flow sensor path (thermal types) or to allow pressure transducers to measure the flow proportional pressure differential (pressure based). Mass flow meters are integral subsystem of mass flow controllers (MFCs). The MFCs use the flow measurement from the mass flow meter as a feedback to the control system which controls the flow modulating valve in the mass flow controller.

A wireless flow restrictor as defined in the preamble of claim 1 is known from US 4 800 754 A. US 5 099 881 A discloses a flow dividing structure for a mass flow controller including a first cylindrical portion, a second cylindrical portion and a tapering frustoconical portion between them, wherein said first and second cylindrical portions are formed with projections. US 4 886 086 A shows a fluid pressure regulator comprising a cylindrical restrictor body having two tapered ends including protrusions at the transition area from the cylindrical to the tapered portion. GB 2 146 139 A describes a similar restrictor additionally including a circular body at each tapered end. US 5 861 546 A refers to a further restrictor body having tapered portions, however, without any protrusion. Mass flow controllers are known from WO 2013/134 150 A1 and WO 98/02686 A1.Pressure based MFCs require a restrictor in the flow path to generate a pressure differential (greater pressure upstream of the restrictor vs pressure downstream of the restrictor). Pressure sensors are then used to measure the upstream and downstream pressures or they measure the differential directly. A suitable control algorithm can then control a valve to modulate the mass flow to stay within acceptable limits of a desired set point. One key to successful control is to design a cost effective, non-contaminating restrictor that possesses the laminar flow characteristics that this type of MFC requires. Typically, this entails constructing a restrictor with very small flow areas (d) and very long flow paths (L) relative to their flow area (i.e., large L/d ratios) as well as very smooth flow paths so as not to introduce turbulence effects. The use of the restrictor is also applicable to thermal based mass flow controllers.

### Brief Summary of the Disclosed Embodiments

The disclosed embodiments include a wireless flow restrictor that includes an elongated tapered cylindrical body having a first end and a second end, wherein the first end has a larger diameter than the second end, a first set of protrusions located on the first end of the elongated tapered cylindrical body and a second set of protrusions located on the second end of the elongated tapered cylindrical body, wherein the first set of protrusions, the second set of protrusions, and the elongated tapered cylindrical body are machined as a single part. The first set of protrusions is located on the first end of a tapered portion of the elongated tapered cylindrical body, and the second set of protrusions is located on the second end of the tapered portion of the elongated tapered cylindrical body, wherein the protrusions are formed by a flat machined at each end into the flow restrictor.

Another disclosed embodiment includes a mass flow controller. In one embodiment, the mass flow controller includes a wireless restrictor as described above that acts as a laminar flow element. The mass flow controller also includes at least one pressure sensing element configured to determine a differential pressure of a fluid flow between an upstream pressure and a downstream pressure of the laminar flow element; a processing element configured to use at least the differential pressure, knowledge of fluid properties, and characteristics of the laminar flow element to determine a mass flow rate; and a proportional control valve configured to control the fluid flow through the laminar flow element in response to a valve drive signal. In certain embodiments, knowledge of fluid properties includes the upstream pressure.

Another disclosed embodiment includes a mass flow meter. In one embodiment, the mass flow meter includes a wireless restrictor as defined above that acts as a laminar flow element. The mass flow meter also includes at least one pressure sensing element configured to determine a differential pressure of a fluid flow between an upstream pressure and a downstream pressure of the laminar flow element; and a processing element configured to use at least the differential pressure, knowledge of fluid properties, and characteristics of the laminar flow element to determine a mass flow rate.

The above summary merely provides examples of particular embodiments disclosed herein and is not intended to be exhaustive or limit the scope of the claims. Other embodiments and advantages of the disclosed embodiments will be further described in the detailed description.

### Brief Description of the Drawings

Illustrative embodiments of the present invention are described in detail below with reference to the attached drawing figures, which are incorporated by reference herein, and wherein:
Figure 1 illustrates a wired restrictor used to accomplish accurate positioning of a restrictor to produce laminar elements with very small flow areas (d) and very long flow paths (L) relative to their flow area;
Figures 2, 2A, and 2B illustrate a wireless restrictor for producing laminar elements with very small flow areas (d) and very long flow paths (L) relative to their flow area in accordance with a disclosed embodiment;
Figure 3 illustrates a wireless restrictor installed in a mating tapered bore to establish the annular gap in accordance with a disclosed embodiment;
Figure 4 illustrates an example of a thermal mass flow meter 140 in a mass flow controller 100 in which an embodiment of the wireless restrictor may be incorporated;
Figures 5A and 5B illustrate examples of pressure based mass flow controllers in which an embodiment of the disclosed wireless restrictor may be incorporated; and
Figure 6 illustrates a graph that depicts an example of differential pressure (dP) vs flow rate using a wireless restrictor as disclosed herein.

The illustrated figures are only exemplary and are not intended to assert or imply any limitation with regard to the environment, architecture, design, or process in which different embodiments may be implemented.

### Detailed Description

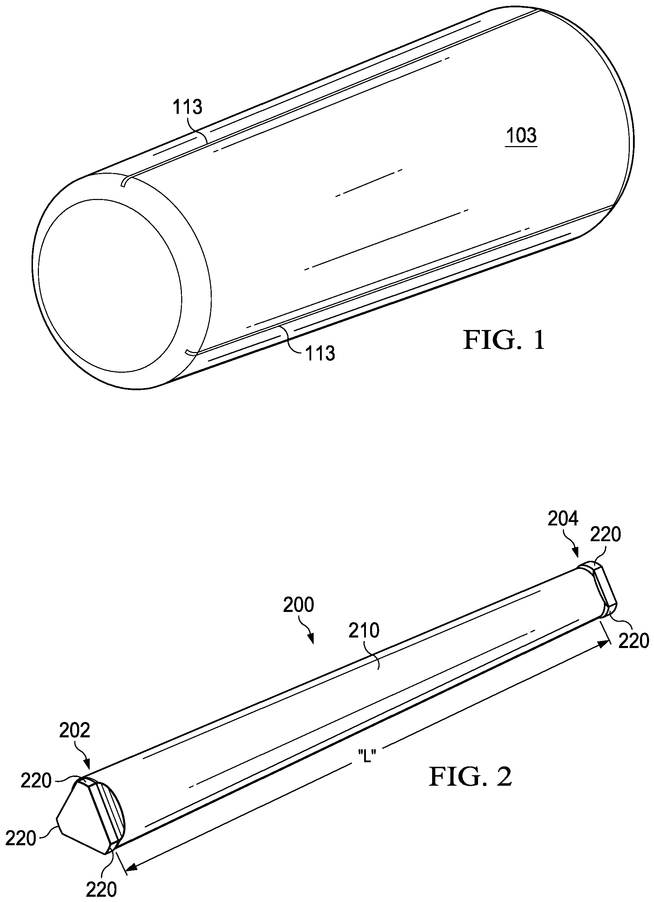

There are a number of ways of producing highly laminar elements with suitable L/d ratios, one of which is to position a tapered restrictor within a tapered bore so as to produce a narrow annular flow path around the restrictor. For example, Figure 1 illustrates one method used to accomplish accurate positioning of a restrictor 103 by using extremely small diameter wires 113, which are arranged axially on the outside of the restrictor and then welded to the ends of the restrictor. The wires 113 are used to ensure uniform spacing in the annular gap. The restrictor 103 and wire assembly 110 is then pressed into a bore of the same taper angle while monitoring the dP across the restrictor until the correct value is indicated. The pressing operation is done with enough force to partially crush the wires while establishing the correct position and thus the correct annular flow area. This crushing provides a retaining force to keep the restrictor in its final location.

The inventor recognized several problems and limitations with the above wired restrictor including:
1) Extremely small wires must be handled, on the order of 0.009 to as small as 0.002.
2) Practical aspects of wire handling limit the size of the wires that can be used and this places a limit on the lower size limit for the annular flow gap (the radial space between the restrictor and the bore)
3) The wires must be oriented, pulled tight and welded in place. This requires hand work, special tooling, and post-weld passivation and cleaning of a delicate assembly with the risk of damaging the wires and/or welds.
4) The wires can become non-parallel with the flow path due to handling and thus produce convergent or divergent flow paths.
5) Welds are often viewed as a source of contamination and metal corrosion initiation in the semiconductor industry applications typical for these products.

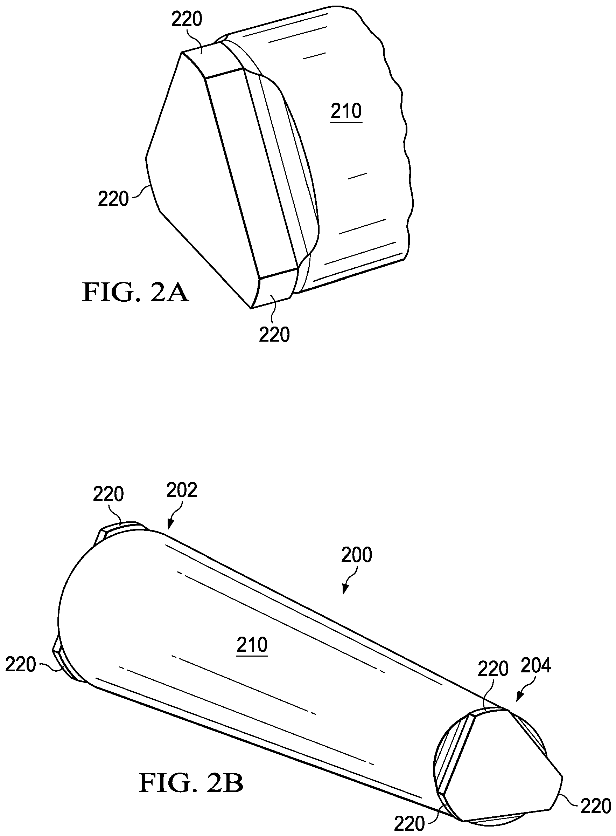

To overcome one or more the above recognized problems, embodiments of the inventions disclosed herein include a wireless restrictor (i.e., without using the wires 113) for producing laminar elements with very small flow areas (d) and very long flow paths (L) relative to their flow area. For example, Figures 2, 2A, and 2B illustrate a single machined part 200 which contains the features of both the tapered restrictor 210 and crushable positioning protrusions 220. The single machined part 200 may be made of any fluid compatible material that has sufficient malleability. Similar to the wired restrictor, the crushing of the protrusions provide for centralizing the tapered restrictor within the bore while also providing a retaining force to keep the wireless flow restrictor in its final location. The tapered restrictor 210 includes a large diameter 202 at one end of the restrictor and a small diameter 204 (in relation to the large diameter) at other one end of the restrictor.

In the depicted embodiment, located at each end of the restrictor 210 are three protrusions 220, but any number of protrusions could be used as long as the protrusions enable the restrictor 210 to be properly center a tapered bore. In some embodiments, it is possible that the number of protrusions 220 may differ at the wider end of the restrictor 210 from that of the smaller end of the restrictor 210.

In accordance with the disclosed embodiments, there is no minimum or maximum limit on the size of the protrusions and therefore, no limit on the lower or upper size limit for the annular flow gap (the radial space between the restrictor and the bore). For example, annular gaps for flow up to several standard liters of nitrogen per minute are typically in the range of <.001 to >.006 inches. Lobe height in excess of the required gap depends on a number of factors including the material, material condition, and desired range of adjustability. Typical, but non-limiting, values for the lobe height are .0005 to .003 inches. In addition, in some embodiments, the size of the protrusions may vary or differ at wider end of the restrictor 210 from that of the smaller end of the restrictor 210.

The flats shown on the ends are one of any number of shapes which could be used to provide the protrusions from the circular shapes initially machined into the restrictor 210. For example, instead of straight triangular sides as shown in the figures, the triangular sides may be curved in certain embodiments. Alternatively, in some embodiments, instead of a triangular shape, the ends and protrusions may be in a circular form such as, but not limited to, a semicircle having a convex or straight edge on one side for providing opening for the annular gap. Other shapes may include a cone shape, and octagon, or a pentagon. In addition, in some embodiments, the shapes or design of the protrusions may differ at the two ends of the restrictor 210.

Because the protrusions are machined directly into the restrictor 210, advantages of the disclosed embodiments include:
1) No handling of small size wires.
2) No limit on the size of the annular flow gap.
3) No special tooling is required. For example, the part can be made directly on conventional Swiss-type screw machines with live tooling.
4) No welding is required, thus eliminating sources of contamination and metal corrosion initiation.
5) Produces straight flow paths with a uniform annular gap (d).
6) The final robust part comes directly off of the machine tool and is easily handled for post-machining passivation and cleaning.

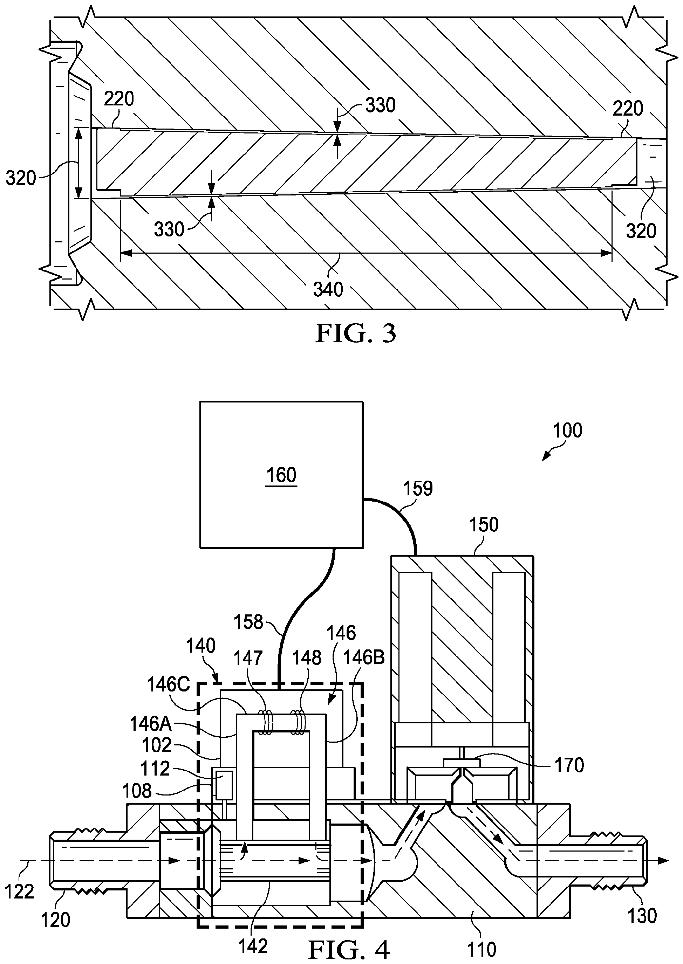

Figure 3 illustrates the wireless restrictor 210 installed in a mating tapered bore 320 to establish a narrow annular flow gap 330 in accordance with a disclosed embodiment. As illustrated, the wireless restrictor 210 has a long gas flow length 340 (L) and creates very small annular flow gap 330 (d) relative to the gas flow length 340 (i.e., large L/d ratios). As shown, the annular flow gap 330 is very smooth so as not to introduce turbulence effects into the flow.

Figure 4 illustrates an example of a thermal mass flow meter 140 in a mass flow controller 100 in which an embodiment of the wireless restrictor may be incorporated. The mass flow controller 100 that includes a block 110, which is the platform on which the components of the MFC are mounted. A thermal mass flow meter 140 and a valve assembly 150 containing a valve 170 are mounted on the block 110 between a fluid inlet 120 and a fluid outlet 130.

The thermal mass flow meter 140 includes a bypass 142 through which typically a majority of fluid flows and a thermal flow sensor 146 through which a smaller portion of the fluid flows. The bypass 142 is tuned with the known fluid to determine an appropriate relationship between fluid flowing in the mass flow sensor and the fluid flowing in the bypass 142 at various known flow rates, so that the total flow through the flow meter can be determined from the sensor output signal. In accordance with the disclosed embodiments, the bypass 142 may be created within the mass flow controller 100 using an embodiment of the wireless restrictor disclosed herein.

The mass flow sensor portion and bypass 142 may then be mated to the control valve 170 and control electronics 160 and then tuned again, under known conditions. The control electronics 160 includes at least one processing element such as, but not limited to, a processor. The responses of the control electronics 160 and the control valve 170 are then characterized so that the overall response of the system to a change in set point or input pressure is known, and the response can be used to control the system to provide the desired response.

Thermal flow sensor 146 is contained within a sensor housing 102 (portion shown removed to show sensor 146) mounted on a mounting plate or base 108. Sensor 146 is a small diameter tube, typically referred to as a capillary tube, with a sensor inlet portion 146A, a sensor outlet portion 146B, and a sensor measuring portion 146C about which two resistive coils or windings 147, 148 are disposed. In operation, electrical current is provided to the two resistive windings 147, 148, which are in thermal contact with the sensor measuring portion 146C. The current in the resistive windings 147, 148 heats the fluid flowing in measuring 30 portion 146 to a temperature above that of the fluid flowing through the bypass 142. The resistance of windings 147, 148 varies with temperature. As fluid flows through the sensor conduit, heat is carried from the upstream resistor 147 toward the downstream resistor 148, with the temperature difference being proportional to the mass flow rate through the sensor.

An electrical signal related to the fluid flow through the sensor is derived from the two resistive windings 147,148. The electrical signal may be derived in a number of different ways, such as from the difference in the resistance of the resistive windings or from a difference in the amount of energy provided to each resistive winding to maintain each winding at a particular temperature. Examples of various ways in which an electrical signal correlating to the flow rate of a fluid in a thermal mass flow meter may be determined are described, for example, in commonly owned U.S. Pat. No. 6,845,659, which is hereby incorporated by reference. The electrical signals derived from the resistive windings 14 7, 148 after signal processing comprise a sensor output signal.

The sensor output signal is correlated to mass flow in the mass flow meter so that the fluid flow can be determined when the electrical signal is measured. The sensor output signal is typically first correlated to the flow in sensor 146, which is then correlated to the mass flow in the bypass 142, so that the total flow through the flow meter can be determined and the control valve 170 can be controlled accordingly. The correlation between the sensor output signal and the fluid flow is complex and depends on a number of operating conditions including fluid species, flow rate, inlet and/or outlet pressure, temperature, etc.

The process of correlating raw sensor output to fluid flow entails tuning and/or calibrating the mass flow controller and is an expensive, labor intensive procedure, often requiring one or more skilled operators and specialized equipment. For example, the mass flow sensor may be tuned by running known amounts of a known fluid through the sensor portion and adjusting certain signal processing parameters to provide a response that accurately represents fluid flow. For example, the output may be normalized, so that a specified voltage range, such as 0 V to 5 V of the sensor output, corresponds to a flow rate range from zero to the top of the range for the sensor. The output may also be linearized, so that a change in the sensor output corresponds linearly to a change in flow rate. For example, doubling of the fluid output will cause a doubling of the electrical output if the output is linearized. The dynamic response of the sensor is determined, that is, inaccurate effects of change in pressure or flow rate that occur when the flow or pressure changes are determined so that such effects can be compensated.

When the type of fluid used by an end-user differs from that used in tuning and/or calibration, or when the operating conditions, such as inlet and outlet pressure, temperature, range of flow rates, etc., used by the end-user differ from that used in tuning and/or calibration, the operation of the mass flow controller is generally degraded. For this reason, the flow meter can be tuned or calibrated using additional fluids (termed "surrogate fluids") and or operating conditions, with any changes necessary to provide a satisfactory response being stored in a lookup table. U.S. Pat. No. 7,272,512 to Wang et al., for "Flow Sensor Signal Conversion," which is owned by the assignee of the present invention and which is hereby incorporated by reference, describes a system in which the characteristics of different gases are used to adjust the response, rather than requiring a surrogate fluid to calibrate the device for each different process fluid used.

One advantage of using embodiments of the disclosed wireless restrictor is that it greatly simplifies the process of predicting performance on a process gas other than the calibration gas enabling improved accuracy on a process gas. A major benefit of the wireless restrictor is the ability to position the tapered cylinder to maintain a very uniform and small annular gap. This enables multi-gas mass flow controller or meter models and improves predictions of performance on the process gas.

In addition, the mass flow controller 100 may include a pressure transducer 112 coupled to flow path at some point, typically, but not limited to, upstream of the bypass 142 to measure pressure in the flow path. Pressure transducer 112 provides a pressure signal indicative of the pressure. In accordance with the disclosed embodiments, the pressure transducer 112 is used to measure pressure during a rate of decay measurement. In some embodiments, the pressure transducer 112 may be a differential pressure transducer with an upstream pressure sensor to obtain gas density.

Control electronics 160 control the position of the control valve 170 in accordance with a set point indicating the desired mass flow rate, and an electrical flow signal from the mass flow sensor indicative of the actual mass flow rate of the fluid flowing in the sensor conduit. Traditional feedback control methods such as proportional control, integral control, proportional-integral (PI) control, derivative control, proportional-derivative (PD) control, integral-derivative (ID) control, and proportional-integral-derivative (PID) control are then used to control the flow of fluid in the mass flow controller. A control signal (e.g., a control valve drive signal) is generated based upon an error signal that is the difference between a set point signal indicative of the desired mass flow rate of the fluid and a feedback signal that is related to the actual mass flow rate sensed by the mass flow sensor. The control valve is positioned in the main fluid flow path (typically downstream of the bypass and mass flow sensor) and can be controlled (e.g., opened or closed) to vary the mass flow rate of fluid flowing through the main fluid flow path, the control being provided by the mass flow controller.

In the illustrated example, the flow rate is supplied by electrical conductors 158 to a closed loop system controller 160 as a voltage signal. The signal is amplified, processed and supplied to the control valve assembly 150 to modify the flow. To this end, the controller 160 compares the signal from the mass flow sensor 140 to predetermined values and adjusts the proportional valve 170 accordingly to achieve the desired flow.

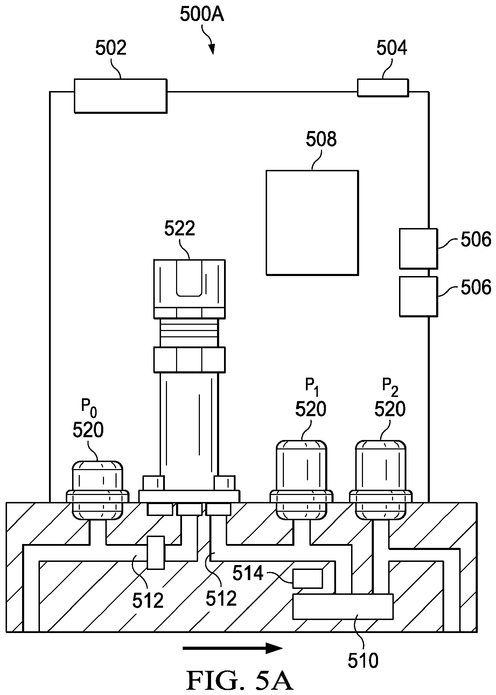

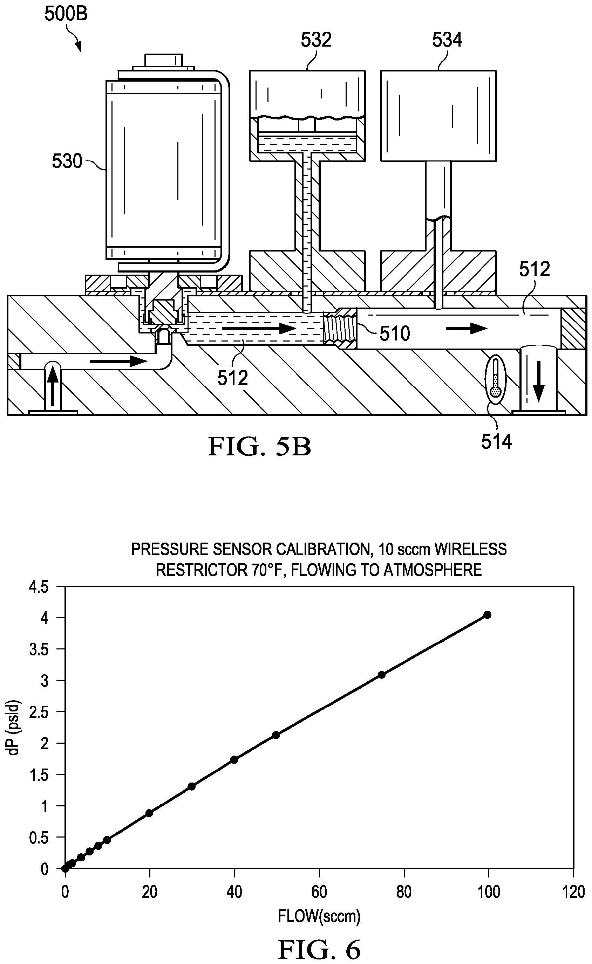

Figures 5A and 5B illustrate examples of pressure based mass flow controllers 500A and 500B in which an embodiment of the disclosed wireless restrictor may be incorporated.

In the depicted embodiment, the pressure based mass flow controller 500A includes, among other things, a power supply connector 502, a display interface 504, a communications interface 506 (e.g., an RS485 communication interface connector), control electronics 508 (e.g., CPU), a fluid pathway 512, one or more temperature sensors 514 and pressure sensors 520, a flow control valve assembly 522, and a laminar flow restrictor 510. The laminar flow restrictor 510 is configured to ensure laminar flow within small flow channels, creating a pressure drop due to shear forces within the fluid. In accordance with the disclosed embodiments, the mass flow controllers 500A uses an embodiment of the wireless restrictor as disclosed herein as the laminar flow restrictor 510.

Similar to the pressure based mass flow controller 500A, the pressure based mass flow controller 500B includes a flow control valve 530 and a first pressure transducer 532 and a second pressure transducer 534. As illustrated in the diagram, the first pressure transducer 532 is configured to measure pressure upstream of the laminar flow restrictor 510 and the second pressure transducer 534 is configured to measure pressure downstream of the laminar flow restrictor 510.

The pressure based mass flow controllers 500A and 500B operates on the principle that changes in fluid flow rate produce changes in the fluid pressure upstream and/or downstream of the laminar flow restrictor 510, from which the fluid flow rate can be calculated. For instance, as depicted in Figure 5A, the pressure based mass flow controller 500A measures the fluid pressure in the fluid pathway 512 upstream of the laminar flow restrictor 510 using a first pressure sensor 520 and measures the fluid pressure in the fluid pathway 512 downstream of the laminar flow restrictor 510 using a second pressure sensor 520. Based on the change in pressure between the pressure measurement upstream of the laminar flow restrictor 510 and the pressure measurement downstream of the laminar flow restrictor 510, the pressure based mass flow controller 500A is configured to calculate the mass flow rate and control the flow using the control electronics 508 and the flow control valve assembly 522 .

Although the above diagrams depict the use of the disclosed embodiments in a mass flow controller, the disclosed embodiments may also be merely used in a mass flow meter for strictly determining a flow rate. For example, one of skill in the art would recognize that the pressure based mass flow controller illustrated in Figure 5B could be altered to create a mass flow meter by removing the proportional inlet valve and any unnecessary control electronics.

Figure 6 illustrates a graph that depicts an example of differential pressure (dP) vs flow rate using a wireless restrictor as disclosed herein. In the depicted example, a 50:1 turn-down flow meter is used with a 10 scmm wireless restrictor. The turn-down ratio indicates the range of flow that a flow meter is able to measure with acceptable accuracy. SCCM is Standard Cubic Centimeters per Minute, a flow measurement term indicating cc/min at a standard temperature and pressure.

The description of the present invention has been presented for purposes of illustration and description, but is not intended to be exhaustive or limited to the invention in the form disclosed.

Many modifications and variations will be apparent to those of ordinary skill in the art without departing from the scope and spirit of the invention. The embodiment was chosen and described to explain the principles of the invention and the practical application, and to enable others of ordinary skill in the art to understand the invention for various embodiments with various modifications as are suited to the particular use contemplated. The scope of the claims is intended to broadly cover the disclosed embodiments and any such modification.

As used herein, the singular forms "a", "an" and "the" are intended to include the plural forms as well, unless the context clearly indicates otherwise. It will be further understood that the terms "comprise" and/or "comprising," when used in this specification and/or the claims, specify the presence of stated features, integers, steps, operations, elements, and/or components, but do not preclude the presence or addition of one or more other features, integers, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed.

## Claims

1. A wireless flow restrictor (210, 510) comprising:
- an elongated tapered cylindrical body having a first end and a second end, wherein the first end has a larger diameter (204) than the second end;
- a first set of protrusions (220) located on the first end of the elongated tapered cylindrical body;
- a second set of protrusions (220) located on the second end of the elongated tapered cylindrical body; and
- wherein the first set of protrusions (220), the second set of protrusions (220), and the elongated tapered cylindrical body are machined as a single part (200),
the protrusions providing for centralising the wireless flow restrictor within a bore, while also providing a retaining force to keep the wireless flow restrictor in its final location within the bore.
wherein the first set of protrusions (220) is located on the first end of a tapered portion of the elongated tapered cylindrical body, and
the second set of protrusions (220) is located on the second end of the tapered portion of the elongated tapered cylindrical body,
**characterized in that**
the protrusions (220) are formed on a flat part machined at each end of the flow restrictor (210, 510).

2. The wireless flow restrictor (210, 510) of claim 1,
wherein the first set of protrusions (220) and second set of protrusions (220) contain a same number of protrusions (220).

3. The wireless flow restrictor (210, 510) of claim 1 or 2,
wherein the first set of protrusions (220) and second set of protrusions (220) are configured to enable the wireless flow restrictor (210, 510) to be properly centered to a tapered bore (320).

4. The wireless flow restrictor (210, 510) of one of the preceding claims, wherein the first set of protrusions (220) and second set of protrusions (220) include at least three protrusions (220).

5. The wireless flow restrictor (210, 510) of one of the preceding claims, wherein the first set of protrusions (220) protrude a specified distance from the first end of the elongated tapered cylindrical body and second set of protrusions (220) protrude the specified distance from the second end of the elongated tapered cylindrical body.

6. The wireless flow restrictor (210, 510) of one of the preceding claims, wherein the first set of protrusions (220) and second set of protrusions (220) are crushable within a mating tapered bore (320), wherein crushing the protrusions (220) provides a retaining force to keep the wireless flow restrictor (210, 510) in its final location.

7. The wireless flow restrictor (210, 510) of claim 6,
wherein the wireless flow restrictor (210, 510) creates an annular flow gap (330) between the wireless flow restrictor (210, 510) and the mating tapered bore (320).

8. The wireless flow restrictor (210, 510) of claim 7,
wherein the wireless flow restrictor (210, 510) is located within a flow path of a mass flow controller (100).

9. The wireless flow restrictor (210, 510) of claim 8,
wherein the mass flow controller (100) includes a first pressure transducer to measure pressure upstream of the wireless flow restrictor (210, 510) and a second pressure transducer to measure pressure downstream of the wireless flow restrictor (210, 510).

10. A mass flow controller (100), **characterized by**
- a laminar flow element, wherein the laminar flow element is a wireless restrictor (210, 510) as defined in one of the preceding claims;
- at least one pressure sensing element (520) configured to determine a differential pressure of a fluid flow between an upstream pressure and a downstream pressure of the laminar flow element;
- a processing element (160) configured to use at least the differential pressure, knowledge of fluid properties, and characteristics of the laminar flow element to determine a mass flow rate; and
- a proportional control valve (170) configured to control the fluid flow through the laminar flow element in response to a valve drive signal.

11. The mass flow controller (100) of claim 10, further comprising:
- a temperature sensing element (146) configured to provide a temperature of a fluid in the laminar flow element, and wherein the processing element (160) configured to use the temperature of the fluid in determining the mass flow rate.

12. A mass flow meter (140), **characterized by**
- a laminar flow element, wherein the laminar flow element is a wireless flow restrictor (210, 510) as defined in one of claims 1 to 9;
- at least one pressure sensing element (520) configured to determine a differential pressure of a fluid flow between an upstream pressure and a downstream pressure of the laminar flow element; and
- a processing element (160) configured to use at least the differential pressure, knowledge of fluid properties, and characteristics of the laminar flow element to determine a mass flow rate.

## Patentansprüche

1. Drahtloser Durchflussbegrenzer (210, 510), der Folgendes umfasst:
- einen langgestreckten, konischen, zylindrischen Körper, der ein erstes Ende und ein zweites Ende besitzt, wobei das erste Ende einen größeren Durchmesser (204) als das zweite Ende besitzt;
- eine erste Gruppe von Vorsprüngen (220), die sich an dem ersten Ende des langgestreckten, konischen, zylindrischen Körpers befinden; und
- eine zweite Gruppe von Vorsprüngen (220), die sich an dem zweiten Ende des langgestreckten, konischen, zylindrischen Körpers befinden;
- wobei die erste Gruppe von Vorsprüngen (220), die zweite Gruppe von Vorsprüngen (220) und der langgestreckte, konische, zylindrische Körper als ein einziges Teil (200) gefertigt sind,
wobei die Vorsprünge eine Zentrierung des drahtlosen Durchflussbegrenzers in einer Bohrung und außerdem eine Haltekraft bereitstellen, um den drahtlosen Durchflussbegrenzer an seinem endgültigen Ort in der Bohrung zu halten,
wobei sich die erste Gruppe von Vorsprüngen (220) an dem ersten Ende eines konischen Abschnitts des langgestreckten, konischen, zylindrischen Körpers befindet und
wobei sich die zweite Gruppe von Vorsprüngen (220) an dem zweiten Ende des konischen Abschnitts des langgestreckten, konischen, zylindrischen Körpers befindet,
**dadurch gekennzeichnet, dass**
die Vorsprünge (220) an einem flachen Teil ausgebildet sind, der an jedem Ende des Durchflussbegrenzers (210, 510) gefertigt ist.

2. Drahtloser Durchflussbegrenzer (210, 510) nach Anspruch 1,
wobei die erste Gruppe von Vorsprüngen (220) und die zweite Gruppe von Vorsprüngen (220) die gleiche Anzahl von Vorsprüngen (220) besitzen.

3. Drahtloser Durchflussbegrenzer (210, 510) nach Anspruch 1 oder 2,
wobei die erste Gruppe von Vorsprüngen (220) und die zweite Gruppe von Vorsprüngen (220) konfiguriert sind, zu ermöglichen, dass der drahtlose Durchflussbegrenzer (210, 510) in einer konischen Bohrung (320) geeignet zentriert wird.

4. Drahtloser Durchflussbegrenzer (210, 510) nach einem der vorhergehenden Ansprüche, wobei
die erste Gruppe von Vorsprüngen (220) und die zweite Gruppe von Vorsprüngen (220) wenigstens drei Vorsprünge (220) enthalten.

5. Drahtloser Durchflussbegrenzer (210, 510) nach einem der vorhergehenden Ansprüche,
wobei die erste Gruppe von Vorsprüngen (220) um eine bestimmte Strecke von dem ersten Ende des langgestreckten, konischen, zylindrischen Körpers vorstehen und eine zweite Gruppe von Vorsprüngen (220) um die bestimmte Strecke von dem zweiten Ende des langgestreckten, konischen, zylindrischen Körpers vorstehen.

6. Drahtloser Durchflussbegrenzer (210, 510) nach einem der vorhergehenden Ansprüche,
wobei die erste Gruppe von Vorsprüngen (220) und die zweite Gruppe von Vorsprüngen (220) in einer passenden konischen Bohrung (320) zerbrochen werden können, wobei das Zerbrechen der Vorsprünge (220) eine Haltekraft bereitstellt, um den drahtlosen Durchflussbegrenzer (210, 510) an seinem endgültigen Ort zu halten.

7. Drahtloser Durchflussbegrenzer (210, 510) nach Anspruch 6,
wobei der drahtlose Durchflussbegrenzer (210, 510) einen ringförmigen Durchflussspalt (330) zwischen dem drahtlosen Durchflussbegrenzer (210, 510) und der passenden konischen Bohrung (320) erzeugt.

8. Drahtloser Durchflussbegrenzer (210, 510) nach Anspruch 7,
wobei sich der drahtlose Durchflussbegrenzer (210, 510) in einem Durchflussweg einer Massendurchfluss-Steuereinheit (100) befindet.

9. Drahtloser Durchflussbegrenzer (210, 510) nach Anspruch 8,
wobei die Massendurchfluss-Steuereinheit (100) einen ersten Druckwandler, um den Druck stromaufseitig des drahtlosen Durchflussbegrenzers (210, 510) zu messen, und einen zweiten Druckwandler, um den Druck stromabseitig des drahtlosen Durchflussbegrenzers (210, 510) zu messen, umfasst.

10. Massendurchfluss-Steuereinheit (100), **gekennzeichnet durch**
- ein Element für laminare Strömung, wobei das Element für laminare Strömung ein drahtloser Begrenzer (210, 510), wie er in einem der vorhergehenden Ansprüche definiert ist, ist;
- wenigstens ein Druckerfassungselement (520), das konfiguriert ist, einen Differenzdruck eines Fluiddurchflusses zwischen einem stromaufseitigen Druck und einem stromabseitigen Druck das Elements für laminare Strömung zu bestimmen;
- ein Verarbeitungselement (160), das konfiguriert ist, wenigstens den Differenzdruck, die Kenntnis über Fluideigenschaften und Charakteristiken des Elements für laminare Strömung zu verwenden, um einen Massendurchfluss zu bestimmen; und
- ein Proportionalsteuerventil (170), das konfiguriert ist, den Fluiddurchfluss durch das Element für laminare Strömung in Reaktion auf ein Ventilansteuersignal zu steuern.

11. Massendurchfluss-Steuereinheit (100) nach Anspruch 10, die ferner Folgendes umfasst:
- ein Temperaturerfassungselement (146), das konfiguriert ist, eine Temperatur eines Fluids in dem Element für laminare Strömung bereitzustellen, wobei das Verarbeitungselement (160) konfiguriert ist, die Temperatur des Fluids bei der Bestimmung des Massendurchflusses zu verwenden.

12. Massendurchflussmesser (140), **gekennzeichnet durch**
- ein Element für laminare Strömung, wobei das Element für laminare Strömung ein drahtloser Durchflussbegrenzer (210, 510), wie er in einem der Ansprüche 1 bis 9 definiert ist, ist;
- wenigstens ein Druckerfassungselement (520), das konfiguriert ist, einen Differenzdruck eines Fluiddurchflusses zwischen einem stromaufseitigen Druck und einem stromabseitigen Druck des Elements für laminare Strömung zu bestimmen; und
- ein Verarbeitungselement (160), das konfiguriert ist, wenigstens den Differenzdruck, die Kenntnis über Fluideigenschaften und Charakteristiken des Elements für laminare Strömung zu verwenden, um einen Massendurchfluss zu bestimmen.

## Revendications

1. Limiteur de débit sans fil (210, 510) comprenant :
- un corps cylindrique effilé de forme allongée comportant une première extrémité et une seconde extrémité, dans lequel la première extrémité a un diamètre plus grand (204) que la seconde extrémité ;
- un premier ensemble de protubérances (220) situées sur la première extrémité du corps cylindrique effilé de forme allongée ;
- un second ensemble de protubérances (220) situées sur la seconde extrémité du corps cylindrique effilé de forme allongée ; et
- dans lequel le premier ensemble de protubérances (220), le second ensemble de protubérances (220) et le corps cylindrique effilé de forme allongée sont usinés en une seule pièce (200), les protubérances permettant de centraliser le limiteur de débit sans fil dans un alésage, fournissant également une force de retenue pour maintenir le limiteur de débit sans fil à son emplacement final dans l'alésage,
dans lequel le premier ensemble de protubérances (220) est situé sur la première extrémité d'une partie effilée du corps cylindrique effilé de forme allongée, et le second ensemble de protubérances (220) est situé sur la seconde extrémité de la partie effilée du corps cylindrique effilé de forme allongée,
**caractérisé en ce que**
les protubérances (220) sont formées sur une partie plate usinée à chaque extrémité du limiteur de débit (210, 510).

2. Limiteur de débit sans fil (210, 510) selon la revendication 1, dans lequel le premier ensemble de protubérances (220) et le second ensemble de protubérances (220) contiennent un même nombre de protubérances (220).

3. Limiteur de débit sans fil (210, 510) selon la revendication 1 ou 2,
dans lequel le premier ensemble de protubérances (220) et le second ensemble de protubérances (220) sont configurés pour permettre au limiteur de débit sans fil (210, 510) d'être correctement centré sur un alésage effilé (320).

4. Limiteur de débit sans fil (210, 510) selon l'une des revendications précédentes, dans lequel le premier ensemble de protubérances (220) et le second ensemble de protubérances (220) comprennent au moins trois protubérances (220).

5. Limiteur de débit sans fil (210, 510) selon l'une des revendications précédentes,
dans lequel le premier ensemble de protubérances (220) fait saillie d'une distance spécifiée de la première extrémité du corps cylindrique effilé de forme allongée et un second ensemble de protubérances (220) fait saillie de la distance spécifiée de la seconde extrémité du corps cylindrique effilé de forme allongée.

6. Limiteur de débit sans fil (210, 510) selon l'une des revendications précédentes,
dans lequel le premier ensemble de protubérances (220) et le second ensemble de protubérances (220) peuvent être écrasés à l'intérieur d'un alésage effilé correspondant (320), dans lequel l'écrasement des protubérances (220) fournit une force de retenue pour maintenir le limiteur de débit sans fil (210, 510) à son emplacement final.

7. Limiteur de débit sans fil (210, 510) selon la revendication 6,
dans lequel le limiteur de débit sans fil (210, 510) crée un espace à débit annulaire (330) entre le limiteur de débit sans fil (210, 510) et l'alésage effilé correspondant (320).

8. Limiteur de débit sans fil (210, 510) selon la revendication 7,
dans lequel le limiteur de débit sans fil (210, 510) est situé dans un parcours d'écoulement d'un contrôleur de débit massique (100).

9. Limiteur de débit sans fil (210, 510) selon la revendication 8,
dans lequel le contrôleur de débit massique (100) comprend un premier transducteur de pression pour mesurer la pression en amont du limiteur de débit sans fil (210, 510) et un second transducteur de pression pour mesurer la pression en aval du limiteur de débit sans fil (210, 510).

10. Contrôleur de débit massique (100), **caractérisé par**
- un élément à écoulement laminaire, dans lequel l'élément à écoulement laminaire est un limiteur sans fil (210, 510) tel que défini dans l'une des revendications précédentes ;
- au moins un élément de détection de pression (520) configuré pour déterminer une pression différentielle d'un écoulement de fluide entre une pression amont et une pression aval de l'élément à écoulement laminaire ;
- un élément de traitement (160) configuré pour utiliser au moins la pression différentielle, la connaissance des propriétés du fluide et les caractéristiques de l'élément à écoulement laminaire afin de déterminer un débit massique ; et
- une vanne de régulation proportionnelle (170) configurée pour contrôler l'écoulement du fluide à travers l'élément d'écoulement laminaire en réponse à un signal de commande de la vanne.

11. Contrôleur de débit massique (100) selon la revendication 10, comprenant en outre :
- un élément de détection de température (146) configuré pour fournir la température d'un fluide dans l'élément à écoulement laminaire, et dans lequel l'élément de traitement (160) est configuré pour utiliser la température du fluide dans la détermination du débit massique.

12. Mesureur de débit massique (140), **caractérisé par**
- un élément à écoulement laminaire, dans lequel l'élément à écoulement laminaire est un limiteur de débit sans fil (210, 510) tel que défini dans l'une des revendications 1 à 9 ;
- au moins un élément de détection de pression (520) configuré pour déterminer une pression différentielle d'un écoulement du fluide entre une pression amont et une pression aval de l'élément à écoulement laminaire ; et
- un élément de traitement (160) configuré pour utiliser au moins la pression différentielle, la connaissance des propriétés du fluide et les caractéristiques de l'élément à écoulement laminaire afin de déterminer un débit massique.
